# EUROPEAN PATENT SPECIFICATION

(11) **EP 2 394 548 B1**
(45) Date of publication and mention of the grant of the patent: **13.11.2013**
(21) Application number: 11380044.5
(22) Date of filing: 20.05.2011
(51) Int. Cl.: A47J 43/044, A47J 43/07

(54) **Hand-held mixer with a detachable head**
Handmixer mit abnehmbarem Kopf
Mélangeur portable doté d´une tête amovible

(30) Priority: 10.06.2010 ES 201000766
(43) Date of publication of application: 14.12.2011
(73) Proprietor: Electrodomésticos Taurus S.L., 25790 Oliana (Lleida) (ES)
(72) Inventor: Codina Vilana, Antoni, 25790 Oliana (Lleida) (ES); Trench Roca, Lluís, 25790 Oliana (Lleida) (ES)
(74) Representative: Torner Lasalle, Elisabet

(56) References cited:
- EP-A1- 1 475 025
- US-A- 2 689 114
- US-B1- 6 974 244

## Description

### Field of the Art

The present invention relates to a hand-held mixer with a detachable head, useful as a motor-driven kitchen implement provided with one or more heads for performing different functions.

### Background of the Invention

Hand-held mixers with a detachable head, essentially comprising a motor assembly with a housing in which there is housed a motor operatively connected for rotating a drive shaft, and a working head comprising a housing and a transmission shaft operatively connected for driving a mechanism or a tool, are known in the state of the art. The working head can be coupled in a removable manner to the motor assembly such that the respective housings are mutually coupled by respective static coupling means keeping the two housings joined together at the same time as the drive shaft and the transmission shaft are coupled to one another by rotating coupling means causing a torque transmission from the drive shaft to the transmission shaft.

Patent US-A-6974244 discloses a hand-held mixer of the referred type in which the static coupling means for coupling the housing of the head to the housing of the motor assembly in a removable manner comprise a bayonet-type connection and the rotating coupling means for coupling the transmission shaft to the drive shaft comprise an externally grooved member which is inserted into an internally grooved socket. The bayonet-type connection has the drawback of requiring a combined movement in the axial and circumferential directions which is not always easy to achieve. Another drawback is the fact that prior to the coupling and uncoupling movements, the circumferential direction to which the housings must be rotated is usually not known, which forces trying in both directions, and in addition, the coupling movement can only be initiated when the housing of the head and the housing of the motor assembly have been arranged in a predetermined relative angular position which often needs to be searched randomly.

### Disclosure of the Invention

The present invention contributes to solving the aforementioned and other drawbacks by providing a hand-held mixer with a detachable head, comprising a motor assembly with a motor housing in which there is housed a motor operatively connected for rotating a drive shaft and a working head comprising a head housing and a transmission shaft installed such that it can rotate but not slide axially, said transmission shaft being operatively connected for driving a mechanism or a tool. The hand-held mixer also includes static coupling means comprising a form fitting between said motor housing and said head housing for coupling the working head to the motor assembly in a static and removable manner, and rotating coupling means comprising first and second rotating coupling members fixed to said drive shaft and to said transmission shaft, respectively, for coupling said drive shaft to said transmission shaft in a torque transmitting and removable manner when the working head is coupled to the motor assembly.

At least one of the drive and transmission shafts is made of a ferromagnetic material, and said static coupling means comprise a magnetic device provided to attract the transmission shaft towards the drive shaft, or vice versa, when the working head is coupled to the motor assembly.

In one embodiment, the magnetic device comprises a permanent magnet installed in said first rotating coupling member fixed to the drive shaft of the motor assembly. In another alternative embodiment, the magnetic device comprises a permanent magnet installed in said second rotating coupling member fixed to the transmission shaft of the working head. In any case, the rotating coupling member incorporating the magnet is a female coupling member having a concavity configured for receiving the other rotating coupling member, which is a male coupling member, and the shaft incorporating the male coupling member is made of the aforementioned ferromagnetic material.

The permanent magnet is installed at the bottom of the aforementioned concavity of the female coupling member in a position suitable to be adjacent to a bare end of the shaft incorporating the male coupling member when the male coupling member is inserted into the concavity of the female coupling member. Thus, the permanent magnet, which is fixed in relation to the shaft incorporating the female coupling member, attracts the shaft incorporating the male coupling member, and the attraction magnetic force is sufficient to maintain coupled the static coupling means provided in the housings of the motor assembly and of the working head.

The concavity of the female coupling member has a distal portion with an inner grooving configured for coupling with an outer grooving formed in the male coupling member and a proximal portion configured for receiving a bare end portion of the shaft incorporating the male coupling member. Inside said proximal portion of the concavity of the female coupling member, there is fixed a bushing made of a ferromagnetic material, which has an end in contact with the permanent magnet. The bushing has an inner hole sized for receiving said bare end portion of the shaft made of ferromagnetic material incorporating the male coupling member. The outer and inner groovings serve to transmit the torque from one shaft to another, and the bushing made of ferromagnetic material closes the magnetic field through the bare portion of the shaft made of ferromagnetic material preventing the dispersion of the magnetic field lines and increasing the attraction magnetic force.

The static coupling means comprise an outer fitting surface formed in the motor housing of the motor assembly and an inner fitting surface formed in the head housing, which are configured for mutually fitting by means of a simple axial movement. The aforementioned outer and inner fitting surfaces ensure a correct positioning of the working head in relation to the motor assembly and a correct alignment of the transmission shaft with respect to the drive shaft when both housings are coupled.

Preferably, the aforementioned outer and inner fitting surfaces are surfaces of revolution surrounding the axes of rotation of the respective drive and transmission shafts, such that the two housings can be coupled to one another in any relative angular position. The housing of the motor assembly comprises outer retention flanges and the head housing has inner retention flanges cooperating mutually to prevent a rotation of the working head in relation to the motor assembly when their respective housings are mutually coupled. Optionally, the outer and inner retention flanges are slightly inclined with respect to the axes of rotation of the drive and transmission shafts, respectively, and according to the direction of rotation thereof, for the purpose of creating a force component in a direction of coupling when the drive shaft tends to rotate the working head with respect to the motor assembly, for example, as a consequence of any resistance to rotation or occasional blockage of the drive shaft with respect to the housing of the working head.

### Brief Description of the Drawings

The foregoing and other advantages and features will be more fully understood from the following detailed description of several embodiments with reference to the attached drawings, in which:
Figs. 1 and 2 are partial section views of a hand-held mixer with a detachable head according to an embodiment of the present invention, with a motor assembly and a working head in uncoupled and coupled positions, respectively;
Fig. 3 is a perspective view of the working head of the hand-held mixer of Figs. 1 and 2;
Fig. 4 is a perspective view of the motor assembly and the working head of the hand-held mixer of Figs. 1 and 2 in the uncoupled position;
Figs. 5 and 6 are partial section views of a hand-held mixer with a detachable head according to another embodiment of the present invention, with a motor assembly and a working head in uncoupled and coupled positions, respectively;
Fig. 7 is a perspective view of a hand-held mixer with a detachable head according to yet another embodiment of the present invention, with a motor assembly and a working head in an uncoupled position; and
Fig. 8 is a partial perspective view of the hand-held mixer of Fig. 7 with the motor assembly and the working head in the uncoupled position.

### Detailed Description of Exemplary Embodiments

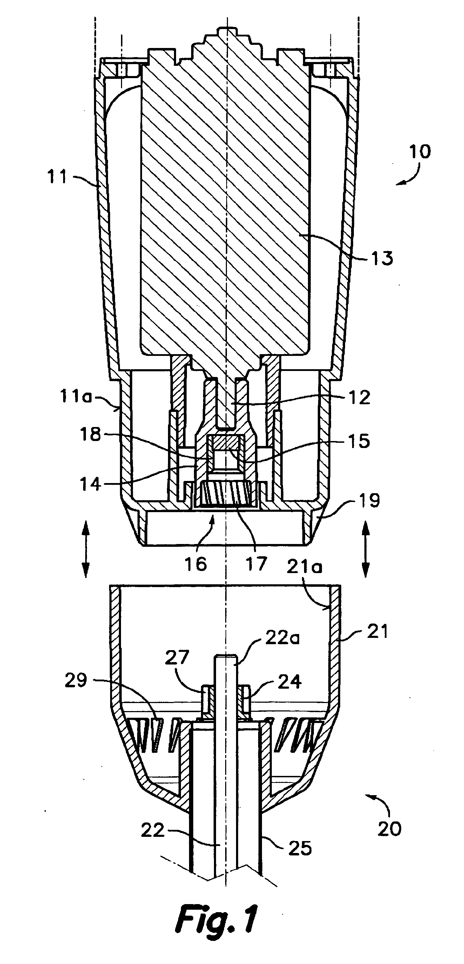

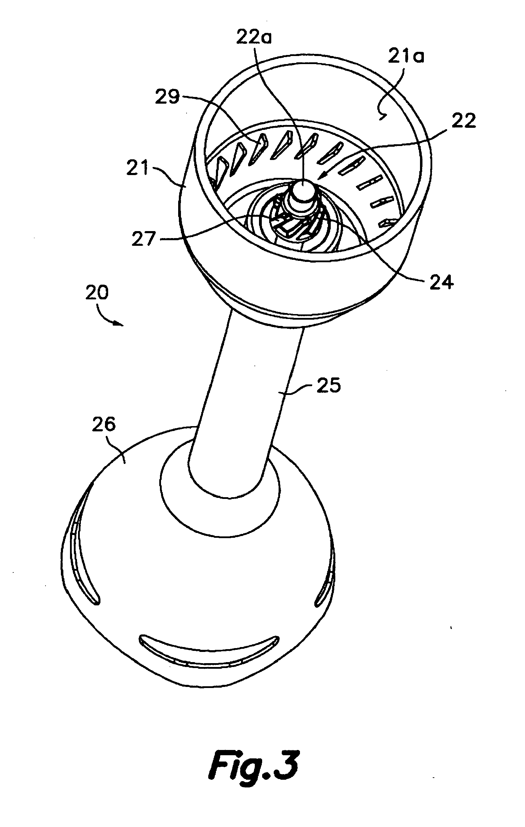

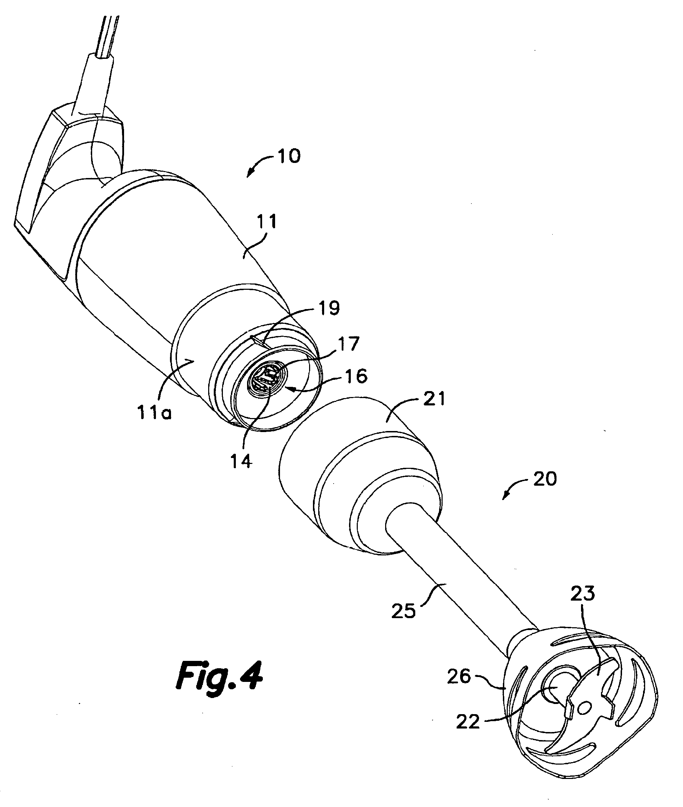

First referring to Figs. 1 to 4, reference numerals 10 and 20 designate, respectively, a motor assembly and a working head of a hand-held mixer according to an embodiment of the present invention. In this embodiment, the working head is a mixer head 20. The aforementioned motor assembly 10 comprises a motor housing 11 in which there is housed a motor 13 operatively connected for rotating a drive shaft 12, and said mixer head 20 is a mixer head comprising a head housing 21, a tubular rod 25 extending from said head housing 21, a transmission shaft 22 installed such that it can rotate but not slide axially inside said tubular rod 25, and a mixer or blender tool 23 connected to a distal end of the transmission shaft 22. The aforementioned mixer or blender tool 23 is protected by a hood 26 fixed to the tubular rod 25.

The motor assembly 10 and the mixer head 20 are independent elements that can be operatively coupled to form the hand-held mixer, static coupling means and rotating coupling means being provided for this purpose. The static coupling means comprise a form fitting between said motor housing 11 and said head housing 21, 31 for coupling the mixer head 20 to the motor assembly 10 in a static and removable manner. The rotating coupling means comprise a first rotating coupling member 14 fixed to said drive shaft 12 of the motor assembly and a second rotating coupling member 24 fixed to said transmission shaft 22 of the working head for coaxially coupling said drive shaft 12 to said transmission shaft 22 in a removable and torque transmitting manner when the mixer head 20 is coupled to the motor assembly 10.

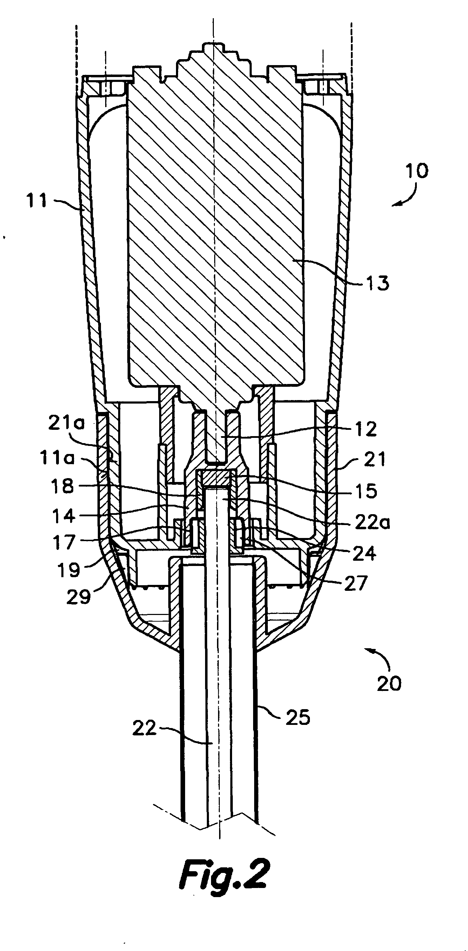

The static coupling means comprise an outer fitting surface 11 a formed in the motor housing 11 of the motor assembly 10 and an inner fitting surface 21a formed in the head housing 21. These outer and inner fitting surfaces 11a, 21a are configured for mutually coupling and uncoupling to one another by means of a simple axial movement. The outer and inner fitting surfaces 11a, 21a are also configured such that, when they are mutually engaged (Figure. 2), the head housing 21 is correctly positioned in relation to the motor housing 11 and the respective drive and transmission shafts 12, 22 are mutually aligned.

The transmission shaft 22 of the working head is made of a ferromagnetic material, and said static coupling means comprise a magnetic device provided to attract the transmission shaft 22 towards the drive shaft 12 when the mixer head 20, 30 is coupled to the motor assembly 10. In the embodiment of Figs. 1 to 4, the magnetic device comprises a permanent magnet 15 installed in said first rotating coupling member 14 fixed to the drive shaft 12.

The first rotating coupling member 14 fixed to the drive shaft 12 has a concavity 16 defining a distal portion provided with an inner grooving 17 and a proximal portion at the bottom of which said permanent magnet 15 is installed. Inside this proximal portion there is likewise fixed a bushing 18 made of a ferromagnetic material, which has an end in contact with the permanent magnet 15. The second rotating coupling member 24 fixed to the transmission shaft 22 has an outer grooving 27 and it is located such that a bare end portion 22a of the transmission shaft 22 protrudes from the rotating coupling member 24.

The distal portion of the concavity 16 of the first rotating coupling member 14 is configured for receiving the second rotating coupling member 24 through the mutual coupling of the respective inner and outer groovings 17, 27, and the bushing 18 fixed inside the proximal portion has an inner hole sized for receiving said bare end portion 22a of the transmission shaft 22 when the first and second rotating coupling members 14, 24 are mutually coupled. The first and second rotating coupling members 14, 24 are also positioned in relation to the outer and inner fitting surfaces 11a, 21a such that the first and second rotating coupling members 14, 24 are mutually coupled at the same time as the outer and inner fitting surfaces 11a, 21a are mutually coupled.

In the coupled position (Fig. 2), a bare end of the transmission shaft 22 is adjacent to the permanent magnet, preferably without mutual contact, and a side surface of the bare end portion 22a of the transmission shaft 22 is surrounded by a surface of the inner hole of the bushing 18. Given that the bushing 18 is made of a material having high magnetic conductivity, the magnetic lines of force of the permanent magnet 15 close through the bushing 18 and the bare end portion 22a of the transmission shaft 22, increasing the action of the permanent magnet 15. Alternatively, the bushing 18 can be omitted, but then a more powerful permanent magnet must generally be installed.

Thus, the permanent magnet 15 magnetically attracts the transmission shaft 22 towards the drive shaft 12. In the coupled position, the outer and inner fitting surfaces 11a, 21a ensure a correct positioning between the housings 11, 21 of the motor assembly 10 and of the mixer head 20 and the attraction magnetic force exerted by the permanent magnet 15 installed in the motor assembly 10 on the transmission shaft 22 installed in the mixer head 20 retains the coupling of the mixer head 20 to the motor assembly 10. A manually exerted light force sufficient to break the attraction magnetic force is sufficient for uncoupling the mixer head 20 from the motor assembly 10 in the direction of uncoupling.

Preferably, the outer and inner fitting surfaces 11a, 21a, 31a of the housings 11, 21 of the motor assembly 10 and of the mixer head 20 are surfaces of revolution surrounding the axes of rotation of the respective drive shaft 12 and transmission shaft 22, respectively, such as for example slightly conical surfaces. Thus, the motor housing 11 and the head housing 21 can be coupled to one another in any angular position selected at random preventing the need of looking for a predetermined angular position. The motor housing 11 of the motor assembly 10 comprises outer retention flanges 19 and the head housing 21 has inner retention flanges 29 cooperating with said outer retention flanges 19 to prevent a relative rotation of the motor assembly 10 and the mixer head 20, 30 when they are mutually coupled.

The outer and inner retention flanges 19, 29 are slightly inclined with respect to the axes of rotation of the respective drive shaft 12 and transmission shaft 22, and according to the direction of rotation thereof to create a force component in a direction of coupling when, in a working condition, the drive shaft 12 of the motor assembly 10 tends to rotate the mixer head 20 as a consequence of an increase of resistance to rotation or blockage of the transmission shaft 22 with respect to the housing 21 of the mixer head 20 due, for example, to the action of the material to be mixed or ground on the mixer or blender tool 23 and the hood 26.

In the embodiment shown, there is a great number of inner retention flanges 29 distributed surrounding the entire circumference and only a small number of outer retention flanges 19, each inner retention flange being intercalated between two outer retention flanges 19 in the coupled position. The separation between the inner retention flanges 29 is also large enough in relation to the thickness of the outer retention flanges 19, the thickness of which allows coupling and uncoupling movements in a substantially axial direction without the need of rotating in the circumferential direction despite the slight inclination of the retention flanges.

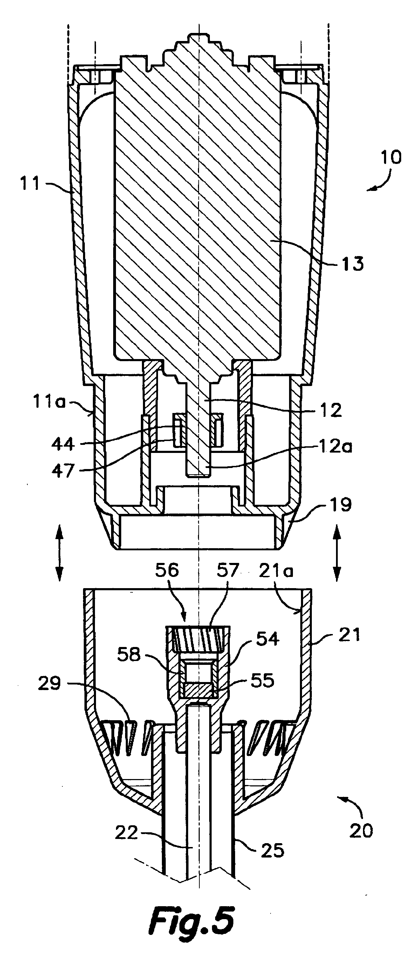

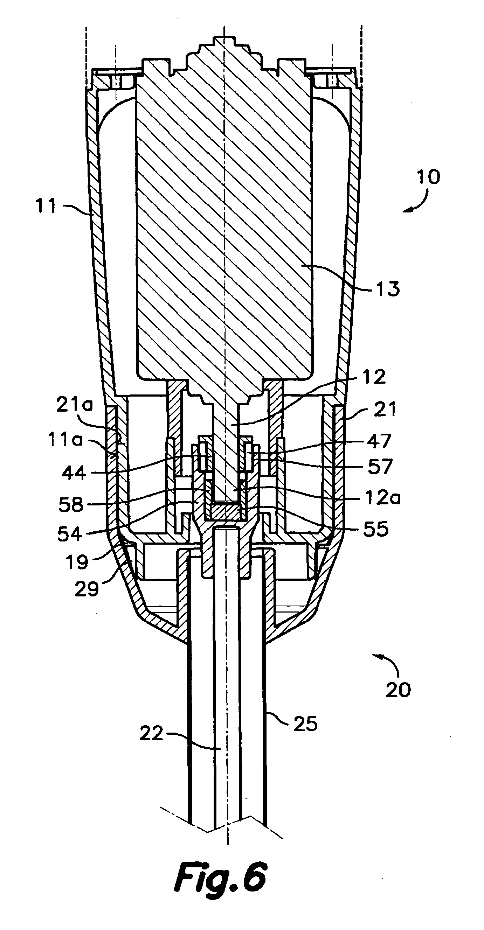

In relation to Figs. 5 and 6, another embodiment of the hand-held mixer of the present invention is now described, which only differs from the embodiment described above in relation to Figs. 1 to 4 in the reverse construction of the magnetic device of the rotating coupling means. Here, the magnetic device comprises a permanent magnet 55 installed in the second rotating coupling member 54 fixed to the transmission shaft 22, and the drive shaft 12 is made of ferromagnetic material.

The aforementioned second rotating coupling member 54 has a concavity 56 comprising a distal portion provided with an inner grooving 57 and a proximal portion at the bottom of which the permanent magnet 55 is installed. Preferably, a bushing 58 made of a ferromagnetic material is fixed inside the proximal portion. The bushing 58 has an end in contact with the permanent magnet 55. A second rotating coupling member 44 provided with an outer grooving 47 is fixed to the drive shaft 12 in a position such that a bare end portion 12a of the drive shaft 12 protrudes from the rotating coupling member 44.

The static coupling means between the motor housing 11 and the head housing 21 are similar to those described above in relation to Figs. 1 to 4. In the coupled position, the first rotating coupling member 44 fixed to the drive shaft 12 is inserted into the distal portion of the concavity 56 of the second rotating coupling member 54 fixed to the drive shaft 12 through the mutual coupling of the respective outer and inner groovings 47, 57 for transmitting a torque, and the bare end portion 12a of the drive shaft 12 is inserted into the proximal portion of the concavity 56, inside an inner hole of the bushing 58 and with a bare end of the drive shaft 12 adjacent to the permanent magnet 55 to exert a magnetic retention force.

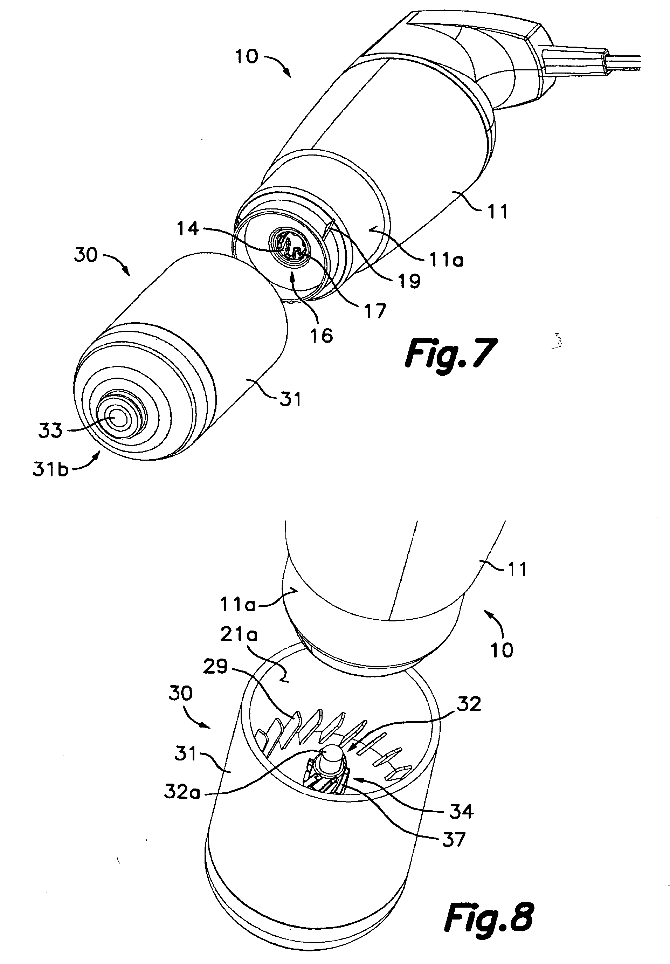

Figs. 7 and 8 show another embodiment of the hand-held mixer of the present invention, which is entirely similar to that described above in relation to Figs. 1 to 4, with the exception that it includes a working head which is a reducer head 30 instead of a mixer head. The aforementioned reducer head comprises a geared reducing mechanism housed in a head housing 31. This reducing mechanism is driven by a transmission shaft 32 and has an output shaft 33 which can be connected to an input shaft of a food processor (not shown) when a coupling section 31b of said head housing 31 is coupled to a corresponding coupling section of said food processor.

The motor housing 11 of the motor assembly 10 has an outer fitting surface 11a configured for fitting an inner fitting surface 31a formed in said head housing 31. The outer and inner fitting surfaces 11a, 31a are preferably surfaces of revolution and comprise respective outer and inner retention flanges 19, 39 cooperating mutually to prevent a relative rotation of the motor assembly 10 and the reducer head 30 when they are mutually coupled.

The drive shaft 12 of the motor assembly 10 incorporates a first fixed rotating coupling member 14 including a magnetic device which is entirely similar to that described above in relation to Figs. 1 to 4. The transmission shaft 32 of the reducer head 30 incorporates a second fixed rotating coupling member 34 having an outer grooving 37 which in the coupled position, couples to the inner groovings 17 of the first rotating coupling member 14. A bare end portion 22a of the transmission shaft 22 protrudes from the second rotating coupling member 34, which in the coupled position is inserted into the socket 18 housed in the first rotating coupling member 14 and in contact with the permanent magnet 15.

A person skilled in the art will understand that, alternatively, the rotating coupling means including the magnetic device of the reducer head 30 in conjunction with the motor assembly 10 could be configured according to the reverse construction described above in relation to Figs. 5 and 6. In fact, the mixer head 20 and the reducer head 30 are interchangeable and can be driven, alternatively, by a single motor assembly 10.

A person skilled in the art will be able to introduce changes and modifications in the described embodiments without departing from the scope of the invention as it is defined in the attached claims.

## Claims

1. A hand-held mixer with a detachable head, comprising:
a motor assembly (10) comprising a motor housing (11) wherein a motor (13) operatively connected for rotating a drive shaft (12) is housed;
a working head (20, 30) comprising a head housing (21, 31) and a transmission shaft (22, 32) installed such that it can rotate but not slide axially, said transmission shaft being (22, 32) operatively connected for driving a mechanism or a tool;
static coupling means comprising a form fitting between said motor housing (11) and said head housing (21, 31) for coupling the working head (20) to the motor assembly (10) in a static and removable manner; and
rotating coupling means comprising first and second rotating coupling members (14, 24, 34; 44, 54) fixed to said drive shaft (12) and to said transmission shaft (22, 32), respectively, for coaxially coupling said drive shaft (12) to said transmission shaft (22, 32) in a torque transmitting and removable manner when the working head (20, 30) is coupled to the motor assembly (10),
**characterized in that** at least one of the drive shaft (12) and transmission shaft (22, 32) is made of a ferromagnetic material, and said static coupling means comprise a magnetic device provided to attract the transmission shaft (22, 32) towards the drive shaft (12), or vice versa, when the working head (20, 30) is coupled to the motor assembly (10).

2. The hand-held mixer according to claim 1, **characterized in that** said magnetic device comprises a permanent magnet (15) installed in said first rotating coupling member (14) fixed to the drive shaft (12).

3. The hand-held mixer according to claim 2, **characterized in that** the first rotating coupling member (14) has a concavity (16) configured for receiving the second rotating coupling member (24, 34) fixed to the transmission shaft (22, 32) and said permanent magnet (15) is installed at the bottom of said concavity (16) in a position suitable to be adjacent to a bare end of the transmission shaft (22, 32), which is made of said ferromagnetic material, when the second rotating coupling member (24, 43) is inserted into the concavity (16) of the first rotating coupling member (14).

4. The hand-held mixer according to claim 3, **characterized in that** said concavity (16) of the first rotating coupling member (14) has a distal portion with an inner grooving (17) configured for coupling with an outer grooving (27, 37) of the second rotating coupling member (24, 34) and a proximal portion configured for receiving a bare end portion (22a, 32a) of the transmission shaft (22, 32).

5. The hand-held mixer according to claim 4, **characterized in that** a bushing (18) made of a ferromagnetic material is fixed inside said proximal portion of the concavity (16) of the first rotating coupling member (14), said bushing (18) having an end in contact with said permanent magnet (15) and an inner hole sized for receiving said bare end portion (22a, 32a) of the transmission shaft (22, 32).

6. The hand-held mixer according to claim 1, **characterized in that** said magnetic device comprises a permanent magnet (55) installed in said second rotating coupling member (54) fixed to the transmission shaft (22).

7. The hand-held mixer according to claim 6, **characterized in that** the second rotating coupling member (54) has a concavity (56) configured for receiving the first rotating coupling member (44) fixed to the drive shaft (12) and said permanent magnet (55) is installed at the bottom of said concavity (56) in a position suitable to be adjacent to a bare end of the drive shaft (12), which is made of said ferromagnetic material, when the first rotating coupling member (44) is inserted into the concavity (56) of the second rotating coupling member (54).

8. The hand-held mixer according to claim 7, **characterized in that** said concavity (56) of the second rotating coupling member (54) has a distal portion with an inner grooving (57) configured for coupling with an outer grooving (47) of the first rotating coupling member (44) and a proximal portion configured for receiving a bare end portion (12a) of the drive shaft (12).

9. The hand-held mixer according to claim 8, **characterized in that** a bushing (58) made of a ferromagnetic material is fixed inside said proximal portion of the concavity (56) of the second rotating coupling member (54), said bushing (58) having an end in contact with said permanent magnet (55) and an inner hole sized for receiving said bare end portion (12a) of the drive shaft (12).

10. The hand-held mixer according to any one of the preceding claims, **characterized in that** said static coupling means comprise an outer fitting surface (11a) formed in the motor housing (11) of the motor assembly (10) and configured to be engaged with an inner fitting surface (21a, 31a) formed in said head housing (21, 31).

11. The hand-held mixer according to claim 10, **characterized in that** said outer and inner fitting surfaces (11a, 21a, 31a) are surfaces of revolution surrounding the axes of rotation of the drive shaft (12) and transmission shaft (22, 32), respectively.

12. The hand-held mixer according to claim 11, **characterized in that** the motor housing (11) of the motor assembly (10) comprises outer retention flanges (19) and the head housing (21, 31) has inner retention flanges (29, 39) cooperating with said outer retention flanges (19) to prevent a relative rotation of the motor assembly (10) and the working head (20, 30) when they are mutually coupled.

13. The hand-held mixer according to claim 12, **characterized in that** said outer and inner retention flanges (19, 29, 39) are inclined with respect to said axes of rotation of the drive shaft (12) and of the transmission shaft (22, 32), respectively, and according to the direction of rotation thereof to create a force component in a direction of coupling when the drive shaft (12) of the motor assembly (10) tends to rotate the working head (20, 30) as a consequence of a resistance to rotation or of a blockage of the transmission shaft (22) with respect to the housing of the working head (20, 30).

14. The hand-held mixer according to any one of the preceding claims, **characterized in that** said working head (20) is a mixer head comprising a tubular rod (25) extending from said head housing (21) and inside which there is installed said transmission shaft (22), and a mixer or blender tool (23) connected to a distal end of the transmission shaft (22).

15. The hand-held mixer according to any one of claims 1 to 13, **characterized in that** said working head (30) is a reducer head comprising a geared reducing mechanism housed in said head housing (31), driven by said transmission shaft (32) and provided with an output shaft (33) connectable to an input shaft of a food processor when a coupling section (31b) of said head housing (31) is coupled to a corresponding coupling section of said food processor.

## Patentansprüche

1. Handrührgerät mit abnehmbarem Aufsatz, umfassend:
eine Motoranordnung (10) umfassend ein Motorgehäuse (11), in welchem ein Motor (13) aufgenommen ist, der für die Rotation einer Antriebswelle (12) operativ verbunden ist;
einen Arbeitsaufsatz (20, 30) umfassend ein Aufsatzgehäuse (21, 31) und eine Übertragungswelle (22, 32), welche so eingesetzt ist, dass sie rotieren aber nicht axial gleiten kann, wobei die genannte Übertragungswelle (22, 32) für den Antrieb eines Mechanismus oder eines Werkzeugs operativ verbunden ist;
statische Kopplungsmittel umfassend einen Formeinsatz zwischen dem genannten Motorgehäuse (11) und dem genannten Aufsatzgehäuse (21, 31) für die Kopplung des Arbeitsaufsatzes (20) mit der Motoranordnung (10) auf eine statische und entfernbare Weise; und
rotierende Kopplungsmittel umfassend erste und zweite rotierende Kopplungselemente (14, 24, 34; 44, 54), welche jeweils an der genannten Antriebswelle (12) und an der genannten Übertragungswelle (22, 32) fixiert sind,
für die koaxiale Kopplung der genannten Antriebswelle (12) mit der genannten Übertragungswelle (22, 32) auf eine drehmomentübertragende und entfernbare Weise, wenn der Arbeitsaufsatz (20, 30) mit der Motoranordnung (10) gekoppelt ist,
**dadurch gekennzeichnet, dass** mindestens eine der Antriebswelle (12) und der Übertragungswelle (22, 32) aus einem ferromagnetischen Material hergestellt ist, und dass die genannten statischen Kopplungsmittel eine magnetische Vorrichtung umfassen, die dazu vorgesehen ist, die Übertragungswelle (22, 32) zur Antriebswelle (12) hin, oder umgekehrt, anzuziehen, wenn der Arbeitsaufsatz (20, 30) mit der Motoranordnung (10) gekoppelt ist.

2. Handrührgerät nach Anspruch 1, **dadurch gekennzeichnet, dass** die genannte magnetische Vorrichtung einen Dauermagnet (15) umfasst, welcher in dem genannten ersten rotierenden, an der Antriebswelle (12) fixierten Kopplungselement (14) eingesetzt ist.

3. Handrührgerät nach Anspruch 2, **dadurch gekennzeichnet, dass** das erste rotierende Kopplungselement (14) eine Höhlung (16) aufweist, welche dazu ausgebildet ist, das zweite rotierende, an der Übertragungswelle (22, 32) fixierte Kopplungselement (24, 34) aufzunehmen und dass der genannte Dauermagnet (15) im Boden der genannten Höhlung (16) in einer Position eingesetzt ist, die geeignet ist, um mit einem freiliegenden Ende der Übertragungswelle (22, 32), die aus dem genannten ferromagnetischen Material hergestellt ist, anzugrenzen, wenn das zweite rotierende Kopplungselement (24, 43) in der Höhlung (16) des ersten rotierenden Kopplungselements (14) eingeführt ist.

4. Handrührgerät nach Anspruch 3, **dadurch gekennzeichnet, dass** die genannte Höhlung (16) des ersten rotierenden Kopplungselements (14) einen distalen Teil mit einer inneren Riffelung (17) aufweist, welche dazu ausgebildet ist, sich mit einer äußeren Riffelung (27, 37) des zweiten rotierenden Kopplungselements (24, 34) zu koppeln und einen proximalen Teil aufweist, welcher dazu ausgebildet ist, einen freiliegenden Endteil (22a, 32a) der Übertragungswelle (22, 32) aufzunehmen.

5. Handrührgerät nach Anspruch 4, **dadurch gekennzeichnet, dass** eine aus einem ferromagnetischen Material hergestellte Buchse (18) innerhalb des genannten proximalen Teils der Höhlung (16) des ersten rotierenden Kopplungselements (14) fixiert ist, wobei die genannte Buchse (18) ein Ende aufweist, welches in Kontakt mit dem genannten Dauermagnet (15) ist und ein inneres Loch aufweist, welches so dimensioniert ist, dass es den genannten freiliegenden Endteil (22a, 32a) der Übertragungswelle (22, 32) aufnimmt.

6. Handrührgerät nach Anspruch 1, **dadurch gekennzeichnet, dass** die genannte magnetische Vorrichtung einen Dauermagnet (55) umfasst, welcher in dem genannten zweiten rotierenden, an der Übertragungswelle (22) fixierten Kopplungselement (54) eingesetzt ist.

7. Handrührgerät nach Anspruch 6, **dadurch gekennzeichnet, dass** das zweite rotierende Kopplungselement (54) eine Höhlung (56) aufweist, welche dazu ausgebildet ist, das erste rotierende, an der Antriebswelle (12) fixierte Kopplungselement (44) aufzunehmen, und dass der genannte Dauermagnet (55) im Boden der genannten Höhlung (56) in einer Position eingesetzt ist, die geeignet ist, um mit einem freiliegenden Ende der Antriebswelle (12), die aus dem genannten ferromagnetischen Material hergestellt ist, anzugrenzen, wenn das erste rotierende Kopplungselement (44) in der Höhlung (56) des zweiten rotierenden Kopplungselements (54) eingeführt ist.

8. Handrührgerät nach Anspruch 7, **dadurch gekennzeichnet, dass** die genannte Höhlung (56) des zweiten rotierenden Kopplungselements (54) einen distalen Teil mit einer inneren Riffelung (57) aufweist, welche dazu ausgebildet ist, sich mit einer äußeren Riffelung (47) des ersten rotierenden Kopplungselements (44) zu koppeln und einen proximalen Teil aufweist, welcher dazu ausgebildet ist, einen freiliegenden Endteil (12a) der Antriebswelle (12) aufzunehmen.

9. Handrührgerät nach Anspruch 8, **dadurch gekennzeichnet, dass** eine aus einem ferromagnetischen Material hergestellte Buchse (58) innerhalb des genannten proximalen Teils der Höhlung (56) des zweiten rotierenden Kopplungselements (54) fixiert ist, wobei die genannte Buchse (58) ein Ende aufweist, welches in Kontakt mit dem genannten Dauermagnet (55) ist und ein inneres Loch aufweist, welches so dimensioniert ist, dass es den genannten freiliegenden Endteil (12a) der Antriebswelle (12) aufnimmt.

10. Handrührgerät nach einem der vorhergehenden Ansprüche, **dadurch gekennzeichnet, dass** die genannten statischen Kopplungsmittel eine äußere Einsatzoberfläche (11a) umfassen, welche in dem Motorgehäuse (11) der Motoranordnung (10) gebildet ist und dazu ausgebildet ist, mit einer inneren Einsatzoberfläche (21a, 31a) in Eingriff zu kommen, welche in dem genannten Aufsatzgehäuse (21, 31) gebildet ist.

11. Handrührgerät nach Anspruch 10, **dadurch gekennzeichnet, dass** die genannte äußere Einsatzoberfläche (11a) und dass die genannte innere Einsatzoberfläche (21a, 31a) Umdrehungsflächen sind, welche jeweils die Rotationsachsen der Antriebswelle (12) und der Übertragungswelle (22, 32) umgeben.

12. Handrührgerät nach Anspruch 11, **dadurch gekennzeichnet, dass** das Motorgehäuse (11) der Motoranordnung (10) äußere Halteflügel (19) umfasst und dass das Aufsatzgehäuse (21, 31) innere Halteflügel (29, 39) aufweist, welche mit den genannten äußeren Halteflügeln (19) zusammenarbeiten, um eine relative Rotation der Motoranordnung (10) und des Arbeitsaufsatzes (20, 30) zu verhindern, wenn diese miteinander gekoppelt sind.

13. Handrührgerät nach Anspruch 12, **dadurch gekennzeichnet, dass** die genannte äußere Halteflügel (19) und die genannte innere Halteflügel (29, 39) jeweils in Bezug auf die genannte Rotationsachsen der Antriebswelle (12) und der Übertragungswelle (22, 32) und gemäß der Rotationsrichtung derselben geneigt sind, um eine Kraftkomponente in einer Kopplungsrichtung herzustellen, wenn die Antriebswelle (12) der Motoranordnung (10) zur Rotation des Arbeitsaufsatz (20, 30) als Folge von einem Widerstand zur Rotation oder von einer Blockierung der Übertragungswelle (22) in Bezug auf das Gehäuse des Arbeitsaufsatzes (20, 30) neigt.

14. Handrührgerät nach einem der vorhergehenden Ansprüche, **dadurch gekennzeichnet, dass** der genannte Arbeitsaufsatz (20) ein Rührgerätaufsatz ist, welcher eine röhrenförmige Stange (25) umfasst, welche sich von dem genannten Aufsatzgehäuse (21) erstreckt und innerhalb welcher die genannte Übertragungswelle (22) eingesetzt ist, und ein Rührgerät- oder Mischerwerkzeug (23) umfasst, welches mit einem distalen Teil der Übertragungswelle (22) verbunden ist.

15. Handrührgerät nach einem der Ansprüche 1 bis 13, **dadurch gekennzeichnet, dass** der genannte Arbeitsaufsatz (30) ein Reduktionsaufsatz ist, umfassend einen verzahnten Reduktionsmechanismus, welcher in dem genannten Aufsatzgehäuse (31) aufgenommen ist, von der genannten Übertragungswelle (32) angetrieben wird und mit einer Abtriebswelle (33) versehen ist, welche mit einer Eingangswelle einer Küchenmaschine verbunden werden kann, wenn ein Kopplungsabschnitt (31 b) des genannten Aufsatzgehäuses (31) mit einem entsprechenden Kopplungsabschnitt der genannten Küchenmaschine gekoppelt ist.

## Revendications

1. Batteur à main avec une tête détachable, comprenant :
un groupe moteur (10) comprenant un logement de moteur (11) dans lequel est logé un moteur (13) relié fonctionnellement pour faire tourner un arbre d'entraînement (12) ;
une tête de travail (20, 30) comprenant un logement de tête (21, 31) et un arbre de transmission (22, 32) installé de manière à pouvoir tourner mais non pas glisser axialement, ledit arbre de transmission (22, 32) étant relié fonctionnellement pour entraîner un mécanisme ou un outil ;
des moyens d'accouplement statiques comprenant un ajustement de forme entre ledit logement de moteur (11) et ledit logement de tête (21, 31) pour accoupler la tête de travail (20) au groupe moteur (10) d'une manière statique et amovible ; et
des moyens d'accouplement rotatifs comprenant des premier et deuxième éléments d'accouplement rotatifs (14, 24, 34 ; 44, 54) fixés audit arbre d'entraînement (12) et audit arbre de transmission (22, 32), respectivement, pour accoupler de manière coaxiale ledit arbre d'entraînement (12) audit arbre de transmission (22, 32) d'une manière à transmission de couple et amovible lorsque la tête de travail (20, 30) est accouplée au groupe moteur (10),
**caractérisé en ce qu'**au moins un de l'arbre d'entraînement (12) et l'arbre de transmission (22, 32) est réalisé en une matière ferromagnétique, et lesdits moyens d'accouplement statiques comprennent un dispositif magnétique prévu pour attirer l'arbre de transmission (22, 32) vers l'arbre d'entraînement (12), ou inversement, lorsque la tête de travail (20, 30) est accouplée au groupe moteur (10).

2. Batteur à main selon la revendication 1, **caractérisé en ce que** ledit dispositif magnétique comprend un aimant permanent (15) installé dans ledit premier élément d'accouplement rotatif (14) fixé à l'arbre d'entraînement (12).

3. Batteur à main selon la revendication 2, **caractérisé en ce que** le premier élément d'accouplement rotatif (14) a une concavité (16) configurée pour recevoir le deuxième élément d'accouplement rotatif (24, 34) fixé à l'arbre de transmission (22, 32) et ledit aimant permanent (15) est installé au fond de ladite concavité (16) dans une position appropriée pour être attenant à une extrémité dénudée de l'arbre de transmission (22, 32), qui est réalisée à partir de ladite matière ferromagnétique, lorsque le deuxième élément d'accouplement rotatif (24, 34) est inséré dans la concavité (16) du premier élément d'accouplement rotatif (14).

4. Batteur à main selon la revendication 3, **caractérisé en ce que** ladite concavité (16) du premier élément d'accouplement rotatif (14) a une portion distale avec un rainurage intérieur (17) configuré pour s'accoupler avec un rainurage extérieur (27, 37) du deuxième élément d'accouplement rotatif (24, 34) et une portion proximale configurée pour recevoir une portion d'extrémité dénudée (22a, 32a) de l'arbre de transmission (22, 32).

5. Batteur à main selon la revendication 4, **caractérisé en ce que** qu'une bague (18) réalisée à partir d'une matière ferromagnétique est fixée à l'intérieur de ladite portion proximale de la concavité (16) du premier élément d'accouplement rotatif (14), ladite bague (18) ayant une extrémité en contact avec ledit aimant permanent (15) et un trou intérieur dimensionné pour recevoir ladite portion d'extrémité dénudé (22a, 32a) de l'arbre de transmission (22, 32).

6. Batteur à main selon la revendication 1, **caractérisé en ce que** ledit dispositif magnétique comprend un aimant permanent (55) installé dans ledit deuxième élément d'accouplement rotatif (54) fixé à l'arbre de transmission (22).

7. Batteur à main selon la revendication 6, **caractérisé en ce que** le deuxième élément d'accouplement rotatif (54) a une concavité (56) configurée pour recevoir le premier élément d'accouplement rotatif (44) fixé à l'arbre d'entraînement (12) et ledit aimant permanent (55) est installé au fond de ladite concavité (56) dans une position appropriée pour être attenant à une extrémité dénudée de l'arbre d'entraînement (12), qui est réalisée à partir de ladite matière ferromagnétique, lorsque le premier élément d'accouplement rotatif (44) est inséré dans la concavité (56) du deuxième élément d'accouplement rotatif (54).

8. Batteur à main selon la revendication 7, **caractérisé en ce que** ladite concavité (56) du deuxième élément d'accouplement rotatif (54) a une portion distale avec un rainurage intérieur (57) configuré pour s'accoupler avec un rainurage extérieur (47) du premier élément d'accouplement rotatif (44) et une portion proximale configurée pour recevoir une portion d'extrémité dénudée (12a) de l'arbre d'entraînement (12).

9. Batteur à main selon la revendication 8, **caractérisé en ce que** qu'une bague (58) réalisée à partir d'une matière ferromagnétique est fixée à l'intérieur de ladite portion proximale de la concavité (56) du deuxième élément d'accouplement rotatif (54), ladite bague (58) ayant une extrémité en contact avec ledit aimant permanent (55) et un trou intérieur dimensionné pour recevoir ladite portion d'extrémité dénudée (12a) de l'arbre d'entraînement (12).

10. Batteur à main selon l'une quelconque des revendications précédentes, **caractérisé en ce que** lesdits moyens d'accouplement statiques comprennent une surface d'ajustement extérieure (11a) formée dans le logement de moteur (11) du groupe moteur (10) et configurée pour être en prise avec une surface d'ajustement intérieure (21 a, 31 a) formée dans ledit logement de tête (21, 31).

11. Batteur à main selon la revendication 10, **caractérisé en ce que** lesdites surfaces extérieure et intérieure (11a, 21a, 31a) sont des surfaces de révolution entourant les axes de rotation de l'arbre d'entraînement (12) et l'arbre de transmission (22, 32), respectivement.

12. Batteur à main selon la revendication 11, **caractérisé en ce que** le logement de moteur (11) du groupe moteur (10) comprend des rebords de rétention extérieurs (19) et le logement de tête (21, 31) a des rebords de rétention intérieurs (29, 39) coopérant avec lesdits rebords de rétention extérieurs (19) pour éviter une rotation relative du groupe moteur (10) et la tête de travail (20, 30) lorsqu'ils sont mutuellement accouplés.

13. Batteur à main selon la revendication 12, **caractérisé en ce que** lesdits rebords de rétention extérieurs et intérieurs (19, 29, 39) sont inclinés par rapport auxdits axes de rotation de l'arbre d'entraînement (12) et de l'arbre de transmission (22, 32), respectivement, et selon leur direction de rotation pour créer une composante de force dans la direction d'accouplement lorsque l'arbre d'entraînement (12) du groupe moteur (10) tend à faire tourner la tête de travail (20, 30) comme conséquence d'une résistance à la rotation o d'un blocage de l'arbre de transmission (22) par rapport au logement de la tête de travail (20, 30).

14. Batteur à main selon l'une quelconque des revendications précédentes, **caractérisé en ce que** ladite tête de travail (20) est une tête de batteur comprenant une tige tubulaire (25) s'étendant dudit logement de tête (21) et à l'intérieur de laquelle est installé ledit arbre de transmission (22), et un batteur ou ustensile mélangeur (23) relié à une extrémité distale de l'arbre de transmission (22).

15. Batteur à main selon l'une quelconque des revendications 1 à 13, **caractérisé en ce que** ladite tête de travail (30) est une tête réductrice comprenant un mécanisme à engrenages réducteurs logé dans ledit logement de tête (31), entraîné par ledit arbre de transmission (32) et pourvu d'un arbre de sortie (33) pouvant être connecté à un arbre d'entrée d'un robot culinaire lorsqu'une section d'accouplement (31 b) dudit logement de tête (31) est accouplée à une section d'accouplement correspondante dudit robot culinaire.
